(19) **Europäisches Patentamt / European Patent Office / Office européen des brevets**

(11) **EP 3 883 258 B1**

(12) **EUROPEAN PATENT SPECIFICATION**

(45) Date of publication and mention
of the grant of the patent:
**15.10.2025 Bulletin 2025/42**

(51) International Patent Classification (IPC):
**H04Q 11/00** $^{(2006.01)}$

(52) Cooperative Patent Classification (CPC):
**H04Q 11/0067; H04Q 2011/0064**

(21) Application number: **20164692.4**

(22) Date of filing: **20.03.2020**

(54) **AN OPTICAL NETWORK UNIT AND AN OPTICAL LINE TERMINAL**

OPTISCHE NETZWERKEINHEIT UND OPTISCHER LEITUNGSANSCHLUSS

UNITÉ DE RÉSEAU OPTIQUE ET TERMINAL DE LIGNE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.09.2021 Bulletin 2021/38**

(73) Proprietor: **Nokia Solutions and Networks Oy 02610 Espoo (FI)**

(72) Inventors:
• **Bidkar, Sarvesh**
**70806 Kornwestheim (DE)**
• **Ziarko, Marcin**
**Cambridge, CB4 3JL (GB)**

(74) Representative: **IP HILLS NV**
**Bellevue 5/501**
**9050 Gent-Ledeberg (BE)**

(56) References cited:
**WO-A1-2019/051869     WO-A2-02/097476**
**US-A1- 2017 250 777     US-A1- 2018 076 914**

• **FRANÇOIS FREDRICX NOKIA BELGIUM: "Goal of Cooperative DBA interface, considerations for mobile front-haul.;C", vol. 2/15, 14 May 2018 (2018-05-14), pages 1 - 5, XP044246459, Retrieved from the Internet <URL:https://www.itu.int/ifa/ifa/t/2017/sg15/exchange/wp1/q2/18-05-15_PhoneCall/180515_D03_CO-DBA.docx> [retrieved on 20180514]**

## Description

## Technical Field

Various example embodiments relate to an optical network unit and an optical line terminal.

## Background

In a point-to-multipoint optical network (passive or active) an Optical Line Terminal, OLT is coupled to multiple Optical Network Units, ONU, in respective optical endpoints via an Optical Distribution Network, ODN. The ODN typically has a tree and branch architecture and comprises optical fibres and passive splitters/combiners that split the optical signals in the downstream directions from the OLT to the ONUs, and, multiplexes the optical signals in the upstream direction from the ONUs to the OLT.

An optical network, ON, may serve as a communication medium or a communication interface for a centralized radio access network, CRAN, to carry radio access network traffic between one or more Radio Units, RUs, and a Central Unit, CU. CRAN networks adopt split-processing where some of the processing of the radio signals is done by the radio units and the rest by the CU. The RUs thus send, via the optical network, and therefore, through the ONU and the OLT, packets to the CU for further processing. To avoid collision between transmissions from different ONUs, time division multiple access, TDMA, is applied for upstream communication from the ONUs to the OLT, i.e. an ONU may transmit packets over the optical network only during a specific allocated time slot. The start and the duration of the time slot are defined by the OLT according to a bandwidth allocation map.

US 2018/076914 A1 discloses a method and a passive optical network (PON) for supporting a mobile network. In various embodiments, a baseband unit (BBU) is configured to measure an optical path delay from each remote radio unit (RRU) of a plurality of RRUs to the BBU during an initialization phase. The BBU synchronizes all the RRUs in the mobile system by adjusting the timing of each path based on the optical path delay between each RRU and the BBU. The BBU determines a mapping rule that maps each resource block assigned to each RRU of the plurality of RRUs to a different PON transport block. The BBU transmits the mapping rule to each RRU of the plurality of RRUs. In certain embodiments, the mapping rule may be recalculated dynamically after the initialization phase.

WO 2019/051869 A1 discloses a method of communication between a base band unit (BBU) and a plurality of remote radio units (RRUs) via a point-to-multipoint time division multiplexing passive optical network (TDM-PON) system. The method can be performed by an ONU and comprises receiving Ethernet packets from the Ethernet interface of an RRU of the plurality of RRUs, performing time-division multiplexing of the Ethernet packets to generate multiplexed packets, storing in a buffer of the ONU the multiplexed packets based on a pre-determined buffer starting time and buffer size, packaging the multiplexed packets in the buffer to fixed length transmission blocks (TBs) having pre-allocated time slots for TDM-PON upstream transmission, and transmitting the TBs to an optical line terminal (OLT) that is communicatively coupled to the BBU such that no contention of TBs occurs at the OLT.

## Summary

Amongst others, it is an object of embodiments of the present disclosure to provide a solution for an optical network supporting a centralized radio access network.

The scope of protection sought for various embodiments of the invention is set out by the independent claims.

The embodiments and features described in this specification that do not fall within the scope of the independent claims, if any, are to be interpreted as examples useful for understanding various embodiments of the invention.

This object is achieved, according to a first example aspect of the present disclosure, by an optical network unit, ONU, configured to communicate in an optical network with an optical line terminal, OLT, and providing communication between at least one radio unit, RU, and a central unit, CU, through the OLT by forwarding to the OLT in accordance with a dynamic upstream allocation map packets from the at least one RU for the CU; the packets respectively comprising a set of frequency domain subcarrier data derived from a time domain symbol for further processing in the CU; wherein the ONU is configured to perform:

- monitoring a length of the packets and/or a rate of the packets;

- detecting a change in the length and/or the rate of the packets; and

- notifying the OLT of the change for adapting the upstream allocation map for the ONU.

In other words, in upstream direction the bandwidth of the optical distribution network is shared among the ONUs by means of time-division multiple access, TDMA. In upstream the TDMA bandwidth allocation is performed by the OLT which grants transmission to each ONU. The grants may be allocated dynamically in accordance with a dynamic upstream allocation map which allocates dynamically bandwidth to the ONUs based on their traffic requirements. According to the dynamic upstream bandwidth allocation, DBA, each ONU is given grants to send upstream bursts of data at a specific time slot, i.e. at a specific point in time and for a specific duration, thereby avoiding any collision between the bursts from different ONUs. The grants may be periodically transmitted by the OLT to the ONUs in an upstream allocation map, BWmap, message with the downstream traffic. For example, a BWmap message is transmitted with every optical network, ON, downstream frame period, e.g. every 125$\mu$s. However, when applying DBA, the upstream allocation maps are calculated at every DBA cycle which is a fixed by the OLT configuration. Typically, a DBA cycle may be performed every eight ON downstream frame periods, e.g. every 1ms. The upstream allocation for all ONUs transmissions may be modified at the same cycle as the DBA and, hence, it remains fixed for the duration of the DBA cycle, i.e. for the duration of eight ON downstream frames.

However, when the optical network, ON, serves as a communication medium for a centralized radio access network, CRAN, the upstream mobile front-haul, MFH, traffic an ONU receives from the RUs may vary significantly within the duration of the DBA cycle. Thus, the profile of the MFH traffic received by an ONU changes more dynamically than the rate with which the upstream bandwidth allocation of the ONU is updated. This leads to the buffering of packets at the ONU, which in turn leads to high latency.

By monitoring the length and the rate of the packets, the ONU is able to detect a change in the MFH traffic profile from the one or more RUs. The ONU then notifies the OLT of the change of the traffic profile so that the OLT adapts the upstream allocation map accordingly. The notification may be done as soon as a change in the traffic profile is detected. By doing so, the OLT is prompted that bandwidth re-allocation is required. This triggers the DBA to re-allocate the upstream bandwidth in accordance with the ONU's request for change of the upstream bandwidth allocation. This way the bandwidth allocation may be adapted in accordance with the changes in the MFH traffic profile, at the rate of change of the MFH traffic. As a result, the bandwidth allocation map may be re-calculated one or more times within a DBA cycle. The buffering of packets at the ONU and, therefore, the latency of the MFH traffic is minimized, as packets from the RUs are forwarded by the ONU to the OLT in an efficient and timely manner.

According to example embodiments, a number of frequency domain subcarrier data and/or a duration of the frequency symbols is configurable between predefined time slots and constant within a predefined time slot.

In CRAN, each RU is allocated a time slot within which it may send packets to the CU. The RU obtains digitally represented time domain symbols which are converted into frequency domain data, i.e. for each time domain symbol a set of frequency domain subcarrier data is derived. The frequency domain subcarrier data is then packetized and sent to the ONU. These packets are herein referred to as MFH packets. Every time slot, the scheduler of the RU checks the subcarrier occupancy. Thus, depending on the subcarrier occupancy, the RU scheduler may change the number of subcarriers it uses. Further, depending on the size of the buffer of the RU, a packet may comprise frequency domain subcarrier data for one or more time domain symbols. Furthermore, depending on the order of numerology used by an RU, the subcarrier spacing may differ. For example, if the numerology is zero, the subcarrier spacing will be 15 KHz, if the numerology is one then the carrier spacing is 30 KHz. As a result, an ONU may receive packets from one or more RUs that have a varying number of subcarriers, i.e. a varying packet length, and/or, a varying subcarrier spacing, i.e. varying packet rate between time slots. Thus, the length and/or rate of the packets sent by the same RU over the optical network remains constant within a time slot but may change between time slots. Further, the rate of changes in the number of the subcarriers may be higher than the rate of changes in the subcarrier spacing. The changes in the number of subcarriers may occur every time slot while changes in the subcarrier spacing may occur after several time slots.

According to example embodiments, the monitoring comprises determining a start of a new time slot based on the detected change in the length and/or rate of the packets. According to example embodiments, the monitoring comprises determining a duration of the new time slot based on the start of a new time slot and a start of a preceding time slot.

By detecting a change in the length and/or rate of the packets, a start of a new time slot, as well as its duration, may be determined. This way the properties of the MFH traffic profile may be easily determined by monitoring changes in the MFH packet length and/or rate.

According to example embodiments, the notifying further comprises providing information indicative for the start and/or the duration of the new time slot.

By notifying the OLT of the start and/or the duration of the new time slot, the OLT is informed of the changes in the MFH traffic profile. In other words, the OLT is prompted that an upstream bandwidth re-allocation for the MFH traffic is required. This allows the OLT to update the upstream bandwidth allocation in accordance with the changes in the MFH traffic profile.

According to example embodiments, the notifying further comprises providing information indicative of a buffer state of the ONU.

The ONU forwards the MFH packets in accordance with its allocated upstream bandwidth. When the upstream bandwidth is insufficient, the ONU transmits part of the MFH packets within its allocated time slot and buffers the rest of the MFH packets until it is allowed to transmit again.

By notifying the OLT of the buffer state of the ONU, the OLT is able to take into account the number of packets buffered at the ONU when updating the upstream bandwidth allocation. This allows the OLT to allocate sufficient bandwidth for the ONU so that the ONU transmits all packets including the buffered packets within its allocated time slot. This allows further minimizing the latency.

According to example embodiments, the ONU is further configured to perform identifying traffic from the at least one RU based on the change of the length and/or the rate of the packets. According to example embodiments, the identifying may further comprise associating the traffic to a respective RU based on the information identifying the respective RU.

By observing the MFH traffic profile, the ONU is able to identify the MFH traffic from the rest of the upstream traffic. This allows prioritizing the MFH traffic. As a result, MFH traffic may be served with a higher priority than the rest of the traffic. This way, minimum latency for the MFH is guaranteed.

According to example embodiments, the ONU is configured to perform receiving an updated upstream allocation map and forwarding subsequent packets according to the updated upstream allocation map.

By receiving an updated upstream allocation map, the ONU is able to transmit the remaining MFH traffic within its updated bandwidth allocation. This way the ONU is able to serve efficiently and with minimum latency upstream traffic with a highly dynamic but periodic traffic profile.

According to a second example aspect an optical line terminal, OLT, is disclosed, the OLT being configured to communicate in an optical network with at least one optical network unit, ONU, further connected to a radio unit, RU, and, the optical network providing communication between the radio unit, RU, and a central unit, CU; wherein the RU forwards packets to the CU respectively comprising a set of frequency domain subcarrier data derived from a time domain symbol for further processing in the CU; wherein the OLT is configured to perform:

- receiving from the ONU a notification on a change of a length and/or rate of the packets;

- determining therefrom an updated upstream allocation map, and

- providing the updated upstream allocation map to the at least one ONU.

By receiving notification of a change in the MFH traffic profile, the OLT is notified that an update of the upstream bandwidth allocation for the ONU is required. This way, the OLT is triggered to update the upstream allocation map more frequently, i.e. at the rate of change of the MFH traffic profile. Depending on the rate of changes, the upstream allocation map may be re-calculated one or more times within a DBA cycle. The updated upstream allocation map is transmitted with the next ON downstream frame. As a result, the packets from the RUs are forwarded by the ONU to the OLT in an efficient and timely manner which leads to minimizing the buffering of packets at the ONU and, therefore, the latency of the MFH traffic.

According to example embodiments, a number of frequency domain subcarrier data and/or a spacing of frequency domain subcarrier data is configurable between predefined time slots and constant within a predefined time slot.

As described above with reference to the first aspect, every time slot an RU may transmit MFH packets with a varying number of subcarriers, i.e. a varying packet length, and/or MFH packets with varying subcarrier spacing, i.e. varying packet rate, between different time slots. Thus, the length and/or rate of the packets sent by the RU over the optical network remains constant within a time slot but may change between time slots. As a result, a change in the length and/or the rate of the packets is indicative for a start of a new time slot. Moreover, a change of the length of the packets is indicative for a start of a new time slot comprising packets with an updated number of frequency domain subcarrier data, while a change of the rate of the packets is indicative for a start of a new time slot comprising packets with an updated spacing of frequency domain subcarrier data.

According to example embodiments, the notification further comprises information indicative for at least a start and/or duration of a new time slot.

By further notifying the OLT of the start and/or the duration of the new time slot, the OLT is informed of the changes in changes in the duration of the MFH time slot. In other words, the OLT is prompted that an update of the upstream bandwidth allocation for the MFH traffic is required. This allows the OLT to update the upstream bandwidth allocation in accordance with the changes in the MFH traffic profile.

According to example embodiments, the notification further comprises information indicative of a buffer state of the ONU, and, wherein the determining is further based on the buffer state information and a round-trip time between the OLT and the at least one ONU.

The round-trip time, RTT, is the amount of time it takes for a signal to be sent to a destination plus the amount of time it takes for an acknowledgment of that signal to be received back at the sender. The RTT time thus consists of the propagation times of the paths between the two communication endpoints, and, in this case, between the ONU and the OLT. Thus, by taking into account the round-trip time and the buffer state information, the OLT is able to determine the number of packets that will be sent by the ONU using the current bandwidth allocation until it receives the updated bandwidth allocation. This allows allocating sufficient bandwidth for the ONU so that the ONU may transmit all packets including any buffered packets within its allocated time slot which in turn allows further minimizing the latency.

The other example embodiments of the first example aspect may further be applied as example embodiments to the second example aspects.

## Brief Description of the Drawings

Some example embodiments will now be described with reference to the accompanying drawings.

FIG.1 shows an example block diagram of a Centralized Radio Access Network, CRAN;

FIG.2 shows an example of a lower layer protocol stack split for the CRAN of FIG.1;

FIG.3 shows an example of mobile front-haul, MFH, traffic;

FIG.4 shows another example of mobile front-haul, MFH, traffic;

FIG.5 shows a flow chart illustrating the various steps performed by the optical network unit, ONU, and, the optical line terminal, OLT, according to example embodiments of the present disclosure.

FIG.6 shows a flow chart illustrating the various steps performed by the optical network unit, ONU, according to various example embodiments the present disclosure.

FIG.7 shows an example embodiment of a suitable computing system for performing one or several steps in embodiments of the invention.

## Detailed Description of Embodiment(s)

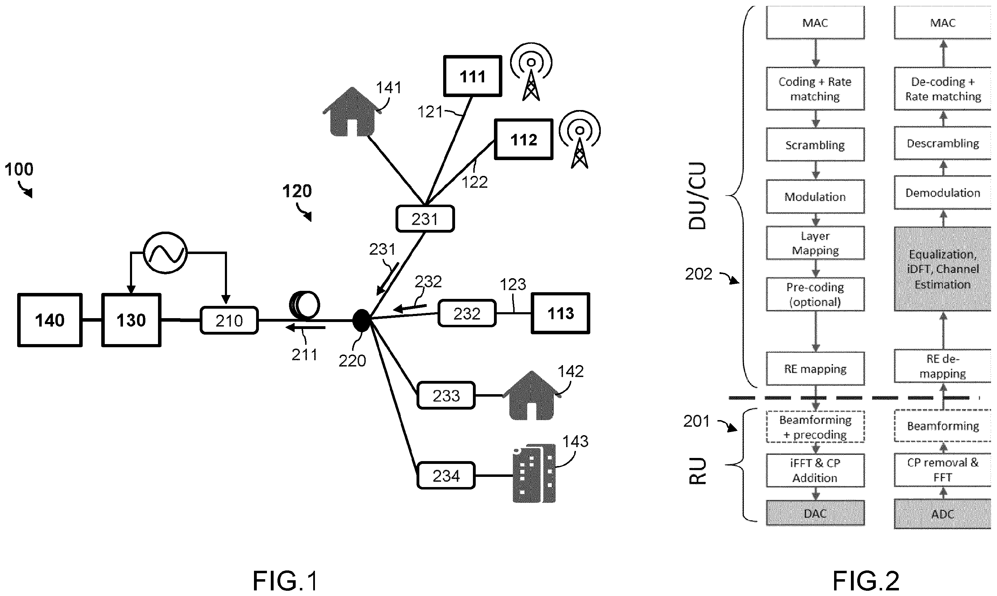

FIG.1 shows an example of an centralized radio access network, CRAN, 100, in which an optical distribution network, ODN, 120 serves as a communication medium or a communication interface for the CRAN to carry a radio access network traffic between one or more Radio Units, RUs, 111-113 and a Central Unit, CU, 130. In such a scenario, the ODN is used for mobile front-haul, MFH, applications where the RUs 111-113 are mobile networking end nodes such as mobile phones or similar. The mobile front-haul application may be further combined with other applications such as applications for residential traffic.

The ODN 120 may be a Gigabit passive optical network, GPON, according to the ITU-T G.984 standard, a 10x Gigabit passive optical network, 10G-PON, according to the ITU-T G.987 standard or 10G symmetrical XGS-PON according to the ITU-T G.9807 standard and a four-channel 10G symmetrical NG-PON2 according to the ITU-T G989 standard.

The ODN 120 comprises optical fibres and an optical splitter 220 which connect an optical line terminal, OLT, 210, to optical network units, ONUs, 231-234. The ODN 120, thus, forms a point-to-multipoint optical network from the OLT to each of the ONUs. The communication medium defined by the optical fibres and the splitter is therefore shared among the ONUs. Upstream data traffic from the respective ONUs 231-234 to the OLT 210 is scheduled according to time-division multiple access, TDMA. According to the TDMA, the TDMA bandwidth allocation is performed by the OLT which grants transmission to each ONU. The grants may be allocated dynamically in accordance with a dynamic upstream allocation map which allocates dynamically bandwidth to the ONUs based on their traffic requirements. According to the dynamic upstream bandwidth allocation, DBA, each ONU is given grants to send upstream bursts of data at a specific time slot, i.e. at a specific point in time and for a specific duration, thereby avoiding any collision between the bursts from different ONUs.

The ONUs act as an interface node to which various end nodes may connect. The end nodes may use another communication technology. End nodes may be RUs 111-113 which operate using mobile communication technology and/or subscriber nodes 141-143 operating using ethernet or DSL based communication technology. Different configurations are possible. For example, ONU 231 may serve home subscribers 141 and radio units 111 and 112, ONU 232 may serve a radio unit 113, and ONUs 233 and 234 may serve home and office subscribers 142 and 143 respectively. The end nodes may further have their bandwidth allocated by a separate network entity. For example, the RUs 111-113 may have their bandwidth allocated by the cell scheduler in the CU 130. Thus, an RU is allocated a specific time slot, i.e. a CRAN time slot, within which it is allowed to transmit data to the CU. The OLT further serves as an interface node that connects the ODN with the upstream access communication network 140 via the CU 130.

The RUs 111-113, the CU 130 and the upstream access communication network 140 which connects the CU to for example the Internet, may be located at the same geographical location or distributed over different locations. Different configurations are possible. For example, the one or more RUs 111-113 may be co-located on the same rack together with the CU 130. Alternatively, the CU 130 may be co-located with the upstream access communication network 140.

CRAN networks may employ different mobile communication technologies, such as a fifth generation, 5G, or fourth generation, 4G, wireless technologies. The 4G wireless technology is typically referred to as a Long-Term Evolution, LTE. Both wireless technologies make use of an orthogonal frequency division multiplex, OFDM, modulation scheme such as a binary phase-shift keying, BPSK, a quadrature phase-shift keying, QPSK, and so on. Such mobile communication technologies adopt a lower-layer or a physical layer split-processing where some of the processing of the radio signals is done by the RUs and the rest by the CU. The physical layer handles the conversion from a bit stream to outgoing radio waves in downlink and reversed for the uplink direction with the radio processing and baseband functions from the protocol stack split up among a Radio Unit, RU, and a Centralized Unit, CU. A functional split in the physical layer, however, requires coordination from the higher layers, i.e. the data link layer and the network layer, and, therefore, the latency requirements on the RU and CU are very strict.

FIG.2 shows a lower-layer split of the physical layer where the processing functions located below the dashed line, i.e. steps 201, are performed by the RU and the functions above the dashed line, i.e. steps 202, are performed by the CU. Different specifications use different numerologies. In the Open Radio Access Network, ORAN, specification such a lower-layer split is referred to as a 7.2x split.

In the downlink direction, the functions in the physical layer block will transform the transport blocks received from the MAC layer into IQ symbols ready for the RF block. In this process, the transport blocks are encoded and segmented into block segments, sending coded blocks through rate matching. The resulting codewords are then scrambled and the coded bits are modulated into symbols. Depending on the order of modulation, i.e. PBSK, QPSK, etc., which determines how many bits are mapped to each symbol, the signal gets reduced. In the layer mapper, the symbols created in the modulation are mapped into one or several transmission layers. Then the symbols on each layer may be pre-coded for transmission on the antenna ports. In the resource element, RE, mapper the symbols are converted into subcarriers by mapping the symbols to resource elements. The next process handles the beamforming and optionally the pre-coding. Then the subcarriers go through the inverse Fast Fourier Transform, iFFT, where they are converted from the frequency domain into IQ symbols in the time domain. Finally, the cyclic prefix, CP, is added to distinguish the frames from another.

In the uplink direction, the same processing steps are performed but in reverse order. In more detail, the RU obtains time domain symbols by synchronization and cyclic prefix removal. The digitally represented time domain symbols are converted by the FFT block into frequency domain representation, i.e. for each time domain symbol a set of frequency domain subcarrier data is derived. For example, one subcarrier may be represented by an in-phase, I, and a quadrature, Q, binary values. The frequency-domain subcarrier data is then beamformed, packetized and sent to the ONU. Thus, a packet sent by the RUs comprises a set of frequency domain subcarriers which represent the time domain symbol.

Depending on the order of numerology, i.e. zero, one or so on, the spacing between the subcarriers differs which results in a change in the symbol duration: a bigger subcarrier spacing results in lower number of subcarriers in a given spectrum, which in turn results in a shorter symbol duration, which in turn results in a shorter time slot duration and vice versa. Further, depending on subcarrier occupancy, the radio scheduler of the RU may select a different number of subcarriers every time slot which results in a change of the packet length. Further, depending on the size of the buffer of the RU, a packet may comprise frequency domain data for one or more time domain symbols. Thus, depending on the above factors, i.e. selected subcarriers, the subcarrier spacing, and the number of time domain symbols represented by the frequency domain subcarrier data within a packet, the packet length and/or rate may change with every time slot but remains constant within the time slot. This leads to a specific MFH traffic profile where the length of the packets, the rate of the packets or the packets inter-arrival time may change every time slot depending on the above factors.

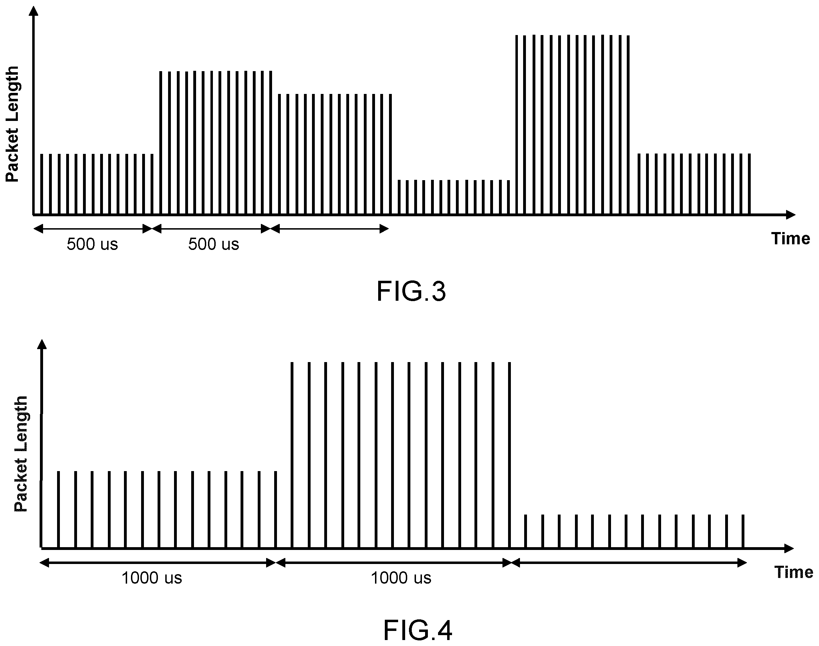

FIG.3 shows an example of a mobile front-haul, MFH, traffic profile. Each vertical line represents an MFH packet transmitted from an RU. The spacing between the MFH packets represents the inter-burst gap. In this example, the MFH packet contains frequency data representing one symbol. Hence, fourteen packets are sent within a time slot at an interval equal to the symbol duration. For a 50 MHz spectrum, a cell with a 30 kHz subcarrier spacing, i.e. a numerology of one, will have 1750 subcarriers with 35.71 $\mu$s symbol duration including cyclic prefix, CP. Thus, 14 packets within a time slot of 500 $\mu$s are transmitted every 35.71 $\mu$s, i.e. packets are transmitted with an inter-burst gap of 35.71 $\mu$s. In this example, there is no change in the rate of the packets, and, therefore, no change in the duration of the time slot. However, a different carrier is selected at every time slot which results in a change of the length of the packet.

Considering the same example, if an MFH packet contains frequency data representing two symbols, then seven packets will be transmitted within the time slot resulting in an inter-burst gap of 71.28 $\mu$s.

FIG.4 shows another example of an MFH traffic profile for a cell with a 15 kHz subcarrier spacing, i.e. a numerology of zero, will have 3300 subcarriers and 71.42 $\mu$s symbol duration including cyclic prefix, CP. Herein, 14 packets are sent within a time slot of 1000 $\mu$s at every symbol duration, i.e. every 71.42 $\mu$s. Similarly, to the example of FIG.3, only the length of the packet changes at every time slot.

Again, if an MFH packet contains frequency data representing two symbols, then seven packets will be transmitted within the time slot resulting in an inter-burst gap of 142.56 $\mu$s.

Further, as described above, the upstream communication from the ONUs to the OLT is performed employing TDMA according to which the OLT assigns allocates dynamically bandwidth to the ONUs based on their traffic requirements. According to the dynamic upstream bandwidth allocation, DBA, each ONU in the ODN is given grants to send upstream bursts of data at a specific point in time and for a specific duration. A grant may further be given specifically for a certain type of traffic which is sometimes referred to as a traffic container or a T-CONT. The grants are periodically transmitted by the OLT to the ONUs in an upstream allocation map, BWmap, message. For example, a BWmap message is transmitted with every optical network, ON, downstream frame period, i.e. every 125$\mu$s. However, when applying DBA, the upstream allocation maps are calculated at a fixed cycle, i.e. at every DBA cycle. Typically, a DBA cycle may be performed every eight ON downstream frame periods, i.e. every 1ms. All T-CONTs thus operate at the same cycle as the DBA and, hence, their bandwidth allocation remains unchanged for the duration of the DBA cycle.

ONU may receive packets from different subscribers 141-143 and/or one or more RUs 111-113. Depending on the cell station to which an RU is connected to and on the cell allocation of the RU, the profile of MFH traffic of the RU will change. Thus, an ONU may receive MFH packets with varying the length and/or the rate every of 500 $\mu$s or 1000 $\mu$s. In other words, the traffic profile of the data received by an ONU may change more dynamically than the rate with which the upstream bandwidth allocation of the ONU is updated. This leads to the buffering of packets at the ONU, which results in an increased latency.

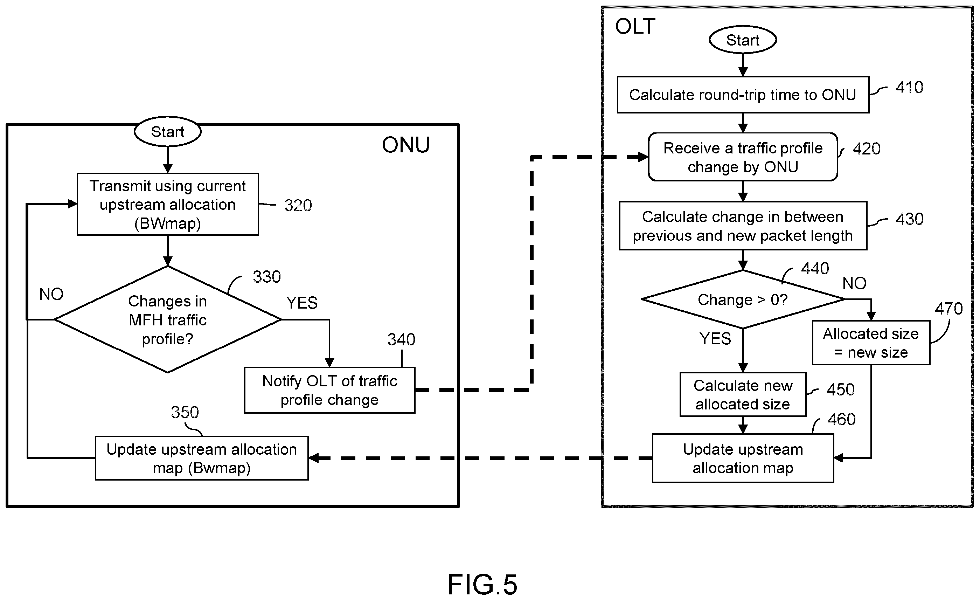

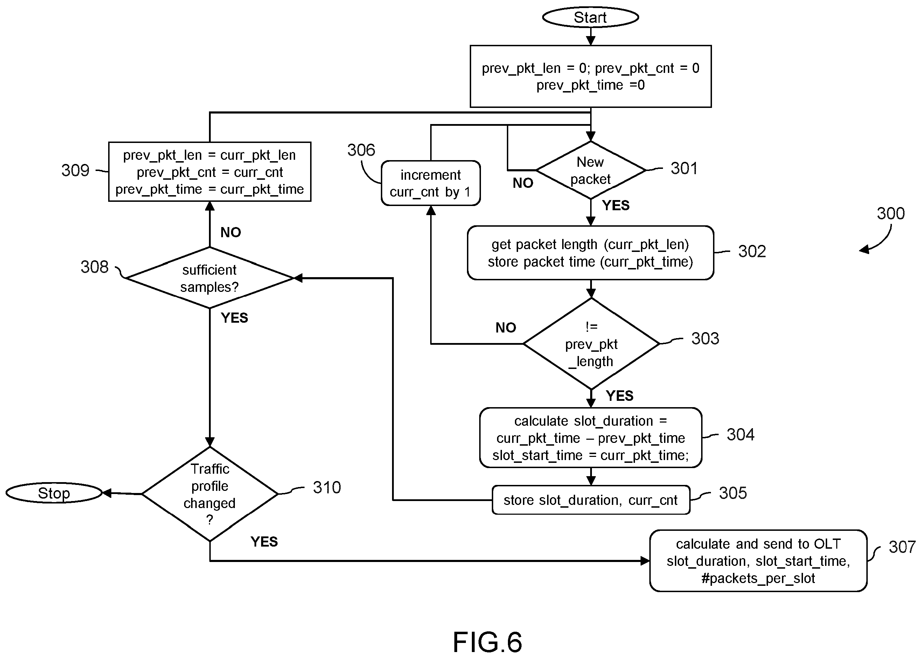

To minimize the latency the present disclosure proposes improved ONU 231-234 and OLT 210 as follows. The operation of the ONU 231-234 and the OLT 210 will be explained in detail below with reference to FIG. 5 and FIG.6. FIG.5 shows a flow chart providing an overview of the various steps performed by the ONU and the OLT and their interaction. FIG.6 shows a flow chart illustrating the various steps performed by the ONU for detecting changes in the traffic profile of the data it receives from the end nodes 111-113 and 141-143.

The ONU 231-234 transmits or forwards 320 the data received from end nodes in accordance with the upstream allocation map. At the same time, the ONU 231-234 monitors the profile of the MFH traffic it receives by monitoring the length and the rate of the MFH packets. Using the header information of a packet, the ONU is able to distinguish between an MFH traffic and residential traffic. For example, the header information may be a VLAN tag, source MAC address or any other suitable information that identifies the sender node and/or the receiver node. The ONU may receive MFH traffic from one or more RUs. The ONU may further classify the upstream MFH traffic it receives from the RUs based on the header information contained in the MFH packets. This way the ONU may prioritize MFH traffic. Furthermore, different priorities may be assigned to MFH traffic from different RUs. For each identified MFH traffic, the ONU will run a process 300 to identify changes 330 in the MFH traffic profile. This process may be performed periodically, the period of which may be configured based on the dynamic properties of the MFH traffic, e.g. based on the subcarrier spacing or another property of the MFH traffic. Changes in the number of subcarriers may occur every time slot while changes in the subcarrier spacing may occur after several time slots. Therefore, the process 300 may be run every time slot to identify changes in the packet length, i.e. to identify changes in the number of subcarriers, and every few time slots to identify changes in the packet rate, i.e. changes in the subcarrier spacing. Furthermore, the process 300 may be run every time a new ONU joins the ODN 120.

More in detail, upon receipt 301 of a new packet, the ONU records 302 the length of the new or current packet, *curr_pkt_len,* in a memory together with its time of arrival, *curr_pkt_time.* Further, it starts counting the packets by for example initializing the *curr_cnt* to 1. As described above, a change in the packet length indicates the start of a new time slot. Thus, in case of difference 303 between the length of the current packet, *curr_pkt_len*, and the length of the previous packet, *prev_pkt_len*, the ONU records 304 the time of arrival of the new packet, *curr_pkt_time,* as a start time of the new time slot, *slot_start_time.* It further calculates 304 the duration of the new time slot, *slot_duration,* by calculating the difference between the time of arrival of the new packet, *curr_pkt_time,* and, the time of arrival of the preceding packet, *prev_pkt_time,* which is then multiplied by the number of packets within a time slot, i.e. by 14. The calculated time slot duration, *slot_duration,* together with the counted received packets, *curr_cnt,* are stored in the memory 305.

If the collected samples are insufficient 308, the ONU keeps monitoring the length of the packets until sufficient samples are collected. The ONU updates the count of the number of received packets 306, by incrementing the value of *curr_cnt* with 1. As the length of the packet remains constant within a time slot and changes only between time slots, at the time a change in packet length is detected, the value of *curr_cnt* will represent the number of packets within a time slot, i.e. *#packets_per_slot.* This way the ONU is able to derive the number of packets within a time slot.

Due to jitter in the packets, the time of arrival of the packets may vary. To account for the jitter sufficient samples 308 are collected to differentiate whether the observed change in the length of the packet is due to the jitter or due to actual change in the packet length. For example, if there are five packets detected with a higher or a lower length then it is assured that the change in packet length is not due to the observed jitter.

If sufficient samples are collected 308, the ONU checks 310 for change in the MFH traffic profile. Upon detection 310 of a change in the length and/or rate of the packets, the ONU notifies 340 the OLT of the change, so that the OLT updates the upstream bandwidth allocation for the ONU while awaiting a response from the OLT with an updated upstream bandwidth allocation map. The ONU thus calculates and sends 307 to the OLT 210 the time slot duration, *slot_duration,* together with the start time of the new time slot, *slot_start_time,* and, the number of packets, *#packets_per_slot.*

The ONU notify the OLT by for example appending this information in the preamble of the following upstream signal burst. Typically, information about the packet rate and a buffer state information of the ONU is added in the preamble of every upstream signal burst. Thus, in addition to the packet rate and the buffer state information, the ONU also transmits 340 the change in the traffic profile, e.g. the new packet length. Instead of the new packet length, the information may contain the relative change in the length of the MFH packets. Alternatively, the information may contain the new length and/or rate of the packets. The ONU thus continues transmission in accordance with its current bandwidth allocation until it receives a response from the OLT with an updated upstream allocation map is received after which the ONU starts transmitting according to the update bandwidth allocation.

Alternatively, the header bits allocated for transmission of the buffer state may be reused to send the information required to notify the OLT of the change in the MFH traffic profile. Therefore, no modifications to the preamble are necessary.

The OLT 210 and the ONUs 231-234 need to be time-synchronized by using, for example, IEEE 1588 or any other suitable timing synchronization mechanism so that an updated upstream allocation map for the ONU may be determine correctly. This may be achieved, for example, at activation of the optical network by calculating 410 the round-trip times for all ONUs in the network. The round-trip time, RTT, is also calculated when a new ONU joins the optical network. After the RTT calculation 410, the OLT then allocates the upstream bandwidth as needed based on the traffic requests by the ONUs end nodes (not shown in the figure).

As described above, the notification 420 may contain information about the change in the length and/or rate of the MFH packets.

Upon receipt of notification 420 of traffic profile change, the OLT 210 determines the change in length of the old and the new packets 430. In case of a change 440 in the packet length, the OLT determines 450 a new allocation for the ONU and updates 460 the upstream bandwidth allocation map accordingly. For example, the ONU may be allocated a time slot with an extended duration. In other words, several consecutive time units may be allocated to the ONU 231-234. For example, 1st to 3rd time units may be allocated to ONU 231 while 4th, 5th and 6th time units may be allocated to the ONUs 232 to 234 respectively. Alternatively, ONU 231 may be allocated several nonconsecutive time units. For example, the two or more odd-number time units may be allocated to ONU 231, i.e. the 1st, 3rd, and 5th-time units may be allocated to the ONU 231, while ONUs 232 to 234 will transmit during the 2nd, 4th, and 6th-time units, respectively. The updated upstream allocation map is transmitted 460 to the ONUs to the ONU with the next frame so the ONUs starts transmitting in accordance with the updated upstream bandwidth allocation. In the case of no change in the packet length, the upstream allocation map remains unchanged 470 and the ONUs continue transmitted in accordance with the current upstream bandwidth allocation map. If the change is packet length smaller than 0, then the current allocation may be maintained 470. Re-transmission of the bandwidth allocation is not required, as there is no modification. Alternatively, the current upstream bandwidth allocation may be reduced to avoid waste of bandwidth allocation. The bandwidth allocation is then updated 460 and transmitted to the ONUs as shown in the figure. The OLT then returns to step 420 and continues to wait for notifications by the ONUs for changes in the MFH traffic profile.

If the change 400 in the MFH traffic profile, i.e. the change in the packet length and/or the packet rate, is greater than 0, the DBA of the OLT is triggered to calculate 450 a new upstream bandwidth allocation as follows.

As described above, the notification 330 includes the duration of the time slot, *slot_duration,* the start time of the new time slot, *slot_start_time,* the number of packets, *#packets_per_slot,* as well as the packet length, *curr_pkt_len.* In addition, information about the buffer state information is also provided with each upstream transmission.

From this information, the following parameters are derived. First, the packet rate, *pkt_rate,* is calculated based on the number of packets, *#packets_per_slot,* and the time slot duration, *slot_duration* as follows

$$pkt\_rate = \frac{\#packets\_per\_slot}{slot\_duration}.$$

In a second step, the OLT calculates the number of packets, *missed_pkts,* are transmitted using the current allocation. The value of the *missed_pkts* is derived based on the *pkt_rate* and the RTT, as follows

$$missed\_pkts = ceil(RTT \times pkt\_rate).$$

By considering the RTT the OLT is able to estimate all packets that are sent using the current allocation until the updated bandwidth allocation is received. The result is rounded up as the numbers of *missed_pkts* is an integer number. The *missed_pkts* value may be pre-stored for example in a look-up table to facilitate the processing times.

8

In a third step, the OLT calculates the new upstream bandwidth allocation *new_allocation.* Typically, the packet length changes every time slot. Assuming this is the case, the *new_allocation* is derived based on the current bandwidth allocation *curr_allocation,* the value of *missed_pkts,* the number of packets per time slot *#pkts_per_slot* and the change in the packet length *change_pkt_length* as follows

$$\text{new\_allocation} = \text{curr\_allocation} + \frac{\text{missed\_pkts} \times \text{change\_pkt\_length}}{\text{\#pkt\_per\_slot} - \text{missed\_pkts}}.$$

The number of MFH packets per time slot *#pkts_per_slot* is reported by the ONU by using the process 300. The *change_pkt_length* parameter is the difference between the current packet length and the new packet length if the new packet length is larger than the previous packet length. If the new packet length is smaller, then the current bandwidth allocation is maintained.

The *new_allocation* defines the update amount of time needed for the ONU to transmit the buffered packets and the packets to be transmitted within the time slot. For example, the OLT may extend the duration of transmission for the ONU by allocating one or more subsequent time units. For example, the OLT may allocate the 3$^{rd}$ time unit in addition to the already allocated 1$^{st}$ and 2$^{nd}$ time units, thereby extending the duration of transmission for the ONU with an additional time unit. This way the transmission duration for the ONU is extended sufficiently so it may transmit the MFH traffic without latency.

The allocation algorithm enables compensating for the inadequate or too small bandwidth by assigning a slightly higher value for the remaining duration of the RU symbol. This results in all of the packets being fully sent out from the ONU by the end of the slot duration.

The OLT updates 460 the upstream bandwidth allocation map and informs the ONU in the next downstream frame.

The OLT is thus able to adapt the upstream bandwidth allocation more dynamically and at rates higher than the DBA cycle. This way end nodes with a highly dynamic but periodic traffic profile changing at pre-determined time intervals may be transmitted over the optical network with minimum latency.

Finally, upon receipt 350 of the updated upstream allocation map, the ONU transmits any subsequent MFH packets in accordance with the updated upstream bandwidth allocation.

The described approach may be readily applied to other lower-layer split of the physical layer where the MFH packet length and/or rate may change between time slots but remains constant within the time slot.

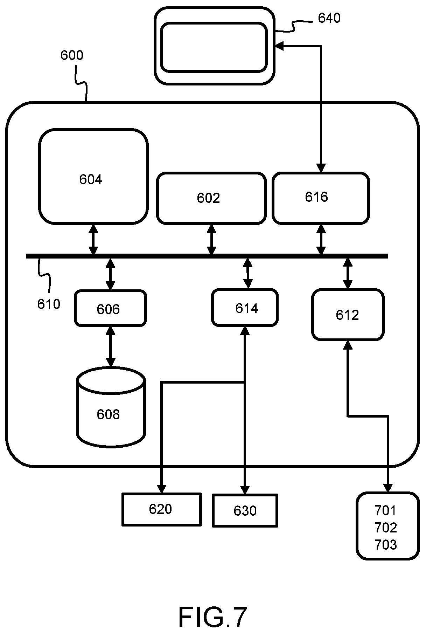

FIG.7 shows a suitable computing system 600 according to an embodiment of the invention. The computing system 600 is suitable for performing the steps of FIG.5. The computing system 600 may, therefore, serve as a partial implementation of the ONU 231-234 and/or as a partial implementation of the OLT 210. Computing system 600 may, in general, be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory, RAM, or another type of dynamic storage device that stores information and instructions for execution by processor 602 and/or read-only memory, ROM, or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as, for example, one or more Ethernet interfaces that enable the computing system 600 to communicate with other devices and/or systems, for example with other computing devices 701, 702, 703. The communication interface 612 of computing system 600 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 610 to one or more storage elements 608, such as one or more local disks, for example, SATA disk drives, and control the reading and writing of data to and/or from these storage elements 608. Although the storage element(s) 608 above is/are described as a local disk, in general, any other suitable computer-readable media such as a removable magnetic disk, optical storage media such as a CD or DVD, -ROM disk, solid-state drives, flash memory cards, ... could be used.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or orientations different from the one(s) described or illustrated above.

## Claims

1. An optical network unit, ONU, (231-232) configured to communicate in an optical network (200) with an optical line terminal, OLT, (210) and providing communication between at least one radio unit, RU, (111-112) and a central unit, CU, (150) through the OLT (210) by forwarding to the OLT (210) in accordance with a dynamic upstream allocation map packets from the at least one RU (111-112) for the CU (150); the packets respectively comprising a set of frequency domain subcarrier data derived from a time domain symbol for further processing in the CU; **characterized by** the ONU is configured to perform:

   - monitoring a length of the packets and a rate of the packets;
   - detecting a change in the length and/or the rate of the packets; and
   - notifying the OLT (210) of the change for adapting the upstream allocation map for the ONU (231-232).

2. The optical network unit, ONU, (231-232) according to claim 1, wherein a number of frequency domain subcarrier data and/or a spacing of frequency domain subcarrier data is configurable between predefined time slots and constant within a predefined time slot.

3. The optical network unit, ONU, (231-232) according to claim 2, wherein the change of the length of the packets is indicative for a start of a new time slot comprising packets with an updated number of frequency domain subcarrier data.

4. The optical network unit, ONU, (231-232) according to claims 2 or 3, wherein the change of the rate of the packets is indicative for a start of a new time slot comprising packets with an updated spacing of frequency domain subcarrier data.

5. The optical network unit, ONU, (231-232) according to claims 3 or 4, wherein the monitoring comprises determining a start of a new time slot based on the detected change in the length and/or rate of the packets.

6. The optical network unit, ONU, (231-232) according to claim 5, wherein the monitoring comprises determining a duration of the new time slot based on the start of a new time slot and a start of a preceding time slot.

7. The optical network unit, ONU, (231-232) according to claims 5 or 6, wherein the notifying further comprises providing information indicative for the start and/or the duration of the new time slot.

8. The optical network unit, ONU, (231-232) according to any of the preceding claims, wherein the ONU is further configured to perform identifying the traffic from the at least one RU based on the change of the length and/or the rate of the packets.

9. The optical network unit, ONU, (231-232) according to claim 8, wherein identifying further comprises associating traffic to a respective RU (111-112) based information identifying the respective RU.

10. The optical network unit, ONU, (231-232) according to any of the preceding claims, further configured to perform receiving an updated upstream allocation map and forwarding subsequent packets according to the updated upstream allocation map.

11. An optical line terminal, OLT, (210) configured to communicate in an optical network (200) with at least one optical network unit, ONU, (231-232) further connected to at least one radio unit, RU, and, the optical network providing communication between the radio unit, RU, and at least one central unit, CU; wherein the RU forwards packets to the CU respectively comprising a set of frequency domain subcarrier data derived from a time domain symbol for further processing in the CU; **characterized by** the OLT is configured to perform:

   - receiving from the ONU a notification on a change of a length and/or rate of the packets;
   - determining therefrom an updated upstream allocation map, and
   - providing the updated upstream allocation map to the at least one ONU (231-232).

12. The optical line terminal, OLT, (210) according to claim 11, wherein a number of frequency domain subcarrier data and/or a spacing of frequency domain subcarrier data is configurable between predefined time slots and constant within a predefined time slot.

13. The optical line terminal, OLT, (210) according to claim 12, wherein the change of the length of the packets is indicative for a start of a new time slot comprising packets with an updated number of frequency domain subcarrier data, and, wherein the change of the rate of the packets is indicative for a start of a new time slot comprising packets with an updated spacing of frequency domain subcarrier data..

14. The optical line terminal, OLT, (210) according to claim 13, wherein the notification further comprises information indicative for at least a start and/or duration of a new time slot.

15. The optical line terminal, OLT, (210) according to any of claims 10 to 13, wherein the notification further comprises information indicative of a buffer state of the ONU, and, wherein the determining is further based on a round-trip time between the OLT and the at least one ONU.

**Patentansprüche**

1. Optische Netzwerkeinheit, ONU, (231-232), die dazu ausgelegt ist, in einem optischen Netzwerk (200) mit einem optischen Leitungsendgerät, OLT, (210) zu kommunizieren und durch Weiterleiten von Paketen an das OLT (210) gemäß einer dynamischen Upstreamzuteilungskarte von der mindestens einen RU (111-112) für die CU (150) zwischen mindestens einer Funkeinheit, RU, (111-112) und einer Zentraleinheit, CU, (150) über das OLT (210) eine Kommunikation bereitzustellen; wobei die Pakete jeweils einen Satz von Frequenzdomänenunterträgerdaten umfassen, die für eine weitere Verarbeitung in der CU von einem Zeitdomänensymbol abgeleitet sind; **dadurch gekennzeichnet, dass** die ONU dazu ausgelegt ist, Folgendes durchzuführen:

- Überwachen einer Länge der Pakete und einer Rate der Pakete;
- Detektieren einer Änderung der Länge und/oder der Rate der Pakete; und
- Benachrichtigen des OLT (210) über die Änderung zum Anpassen der Upstreamzuteilungskarte für die ONU (231-232).

2. Optische Netzwerkeinheit, ONU, (231-232) nach Anspruch 1, wobei eine Anzahl von Frequenzdomänenunterträgerdaten und/oder ein Zwischenraum von Frequenzdomänenunterträgerdaten zwischen vordefinierten Zeitschlitzen auslegbar und in einem vordefinierten Zeitschlitz konstant ist.

3. Optische Netzwerkeinheit, ONU, (231-232) nach Anspruch 2, wobei die Änderung der Länge der Pakete einen Start eines neuen Zeitschlitzes anzeigt, der Pakete mit einer aktualisierten Anzahl von Frequenzdomänenunterträgerdaten umfasst.

4. Optische Netzwerkeinheit, ONU, (231-232) nach Anspruch 2 oder 3, wobei die Änderung der Rate der Pakete einen Start eines neuen Zeitschlitzes anzeigt, der Pakete mit eines aktualisierten Zwischenraums von Frequenzdomänenunterträgerdaten umfasst.

5. Optische Netzwerkeinheit, ONU, (231-232) nach Anspruch 3 oder 4, wobei das Überwachen das Bestimmen eines Starts eines neuen Zeitschlitzes auf Basis der detektierten Änderung der Länge und/oder der Rate der Pakete umfasst.

6. Optische Netzwerkeinheit, ONU, (231-232) nach Anspruch 5, wobei das Überwachen das Bestimmen einer Dauer des neuen Zeitschlitzes auf Basis des Starts eines neuen Zeitschlitzes und eines Starts eines vorherigen Zeitschlitzes umfasst.

7. Optische Netzwerkeinheit, ONU, (231-232) nach Anspruch 5 oder 6, wobei das Benachrichtigen ferner das Bereitstellen von Informationen umfasst, die den Start und/oder die Dauer des neuen Zeitschlitzes anzeigen.

8. Optische Netzwerkeinheit, ONU, (231-232) nach einem der vorhergehenden Ansprüche, wobei die ONU ferner dazu ausgelegt ist, das Identifizieren des Verkehrs von mindestens einer RU auf Basis der Änderung der Länge und/oder der Rate der Pakete durchzuführen.

9. Optische Netzwerkeinheit, ONU, (231-232) nach Anspruch 8, wobei das Identifizieren ferner das Verknüpfen von Verkehr zu einer jeweiligen RU (111-112) auf Basis von Informationen umfasst, die die jeweilige RU identifizieren.

10. Optische Netzwerkeinheit, ONU, (231-232) nach einem der vorhergehenden Ansprüche, die ferner dazu ausgelegt ist, das Empfangen einer aktualisierten Upstreamzuteilungskarte und das Weiterleiten von nachfolgenden Paketen gemäß der aktualisierten Upstreamzuteilungskarte durchzuführen.

11. Optisches Leitungsendgerät, OLT, (210), das dazu ausgelegt ist, in einem optischen Netzwerk (200) mit mindestens einer optischen Netzwerkeinheit, ONU, (231-232) zu kommunizieren, die ferner mit mindestens einer Funkeinheit, RU, verbunden ist, und wobei das optische Netzwerk zwischen der Funkeinheit, RU, und mindestens einer Zentraleinheit, CU, eine Kommunikation bereitstellt; wobei die RU Pakete zur CU weiterleitet, die jeweils einen Satz von Frequenzdomänenunterträgerdaten umfassen, die zum weiteren Verarbeiten in der CU aus einem Zeitdomänensymbol abgeleitet sind;
**dadurch gekennzeichnet, dass** das OLT dazu ausgelegt ist, Folgendes durchzuführen:

- Empfangen einer Benachrichtigung über eine Änderung einer Länge und/oder einer Rate der Pakete von der ONU;
- Bestimmen daraus einer aktualisierten Upstreamzuteilungskarte, und
- Bereitstellen der aktualisierten Upstreamzuteilungskarte für die mindestens eine ONU (231-232).

12. Optisches Leitungsendgerät, OLT, (210) nach Anspruch 11, wobei eine Anzahl von Frequenzdomänenunterträgerdaten und/oder ein Zwischenraum von Frequenzdomänenunterträgerdaten zwischen vordefinierten Zeitschlitzen auslegbar und in einem vordefinierten Zeitschlitz konstant ist.

13. Optisches Leitungsendgerät, OLT, (210) nach Anspruch 12, wobei die Änderung der Länge der Pakete einen Start eines neuen Zeitschlitzes anzeigt, der Pakete mit einer aktualisierten Anzahl von Frequenzdomänenunterträgerdaten umfasst, und wobei die Änderung der Rate der Pakete einen Start eines neuen Zeitschlitzes anzeigt, der Pakete mit einem aktualisierten Zwischenraum von Frequenzdomänenunterträgerdaten umfasst.

14. Optisches Leitungsendgerät, OLT, (210) nach Anspruch 13, wobei die Benachrichtigung ferner Informationen umfasst, die mindestens einen Start und/oder eine Dauer eines neuen Zeitschlitzes anzeigen.

15. Optisches Leitungsendgerät, OLT, (210) nach einem der Ansprüche 10 bis 13, wobei die Benachrichtigung ferner Informationen umfasst, die einen Pufferstatus der ONU anzeigen, und wobei das Bestimmen ferner auf einer Umlaufzeit zwischen dem OLT und der mindestens einen ONU basiert.

**Revendications**

1. Unité de réseau optique, ONU, (231 à 232) configurée pour communiquer dans un réseau optique (200) avec un terminal de ligne optique, OLT, (210) et assurer la communication entre au moins une unité radio, RU, (111 à 112) et une unité centrale, CU, (150) via l'OLT (210), en transférant des paquets à l'OLT (210) conformément à une carte d'allocation amont dynamique depuis l'au moins une RU (111 à 112) pour la CU (150) ; les paquets comprenant respectivement un ensemble de données de sous-porteuses dans le domaine fréquentiel dérivées d'un symbole dans le domaine temporel pour un traitement ultérieur dans la CU ;
   **caractérisée en ce que** l'ONU est configurée pour effectuer ce qui suit :

   - surveiller une longueur des paquets et un débit des paquets ;
   - détecter un changement de la longueur et/ou du débit des paquets ; et
   - notifier le changement à l'OLT (210) pour adapter la carte d'allocation amont pour l'ONU (231 à 232).

2. Unité de réseau optique, ONU, (231 à 232) selon la revendication **1,** dans laquelle un nombre de données de sous-porteuses dans le domaine fréquentiel et/ou un espacement de données de sous-porteuses dans le domaine fréquentiel est configurable entre des intervalles de temps prédéfinis et constants dans un intervalle de temps prédéfini.

3. Unité de réseau optique, ONU, (231 à 232) selon la revendication **2,** dans laquelle le changement de la longueur des paquets indique un début d'un nouvel intervalle de temps comprenant des paquets avec un nombre de données de sous-porteuses dans le domaine fréquentiel mises à jour.

4. Unité de réseau optique, ONU, (231 à 232) selon les revendications 2 ou 3, dans laquelle le changement du débit des paquets indique un début d'un nouvel intervalle de temps comprenant des paquets avec un espacement de données de sous-porteuses dans le domaine fréquentiel mises à jour.

5. Unité de réseau optique, ONU, (231 à 232) selon les revendications 3 ou 4, dans laquelle la surveillance comprend la détermination d'un début d'un nouvel intervalle de temps sur la base du changement de la longueur et/ou du débit des paquets détecté.

6. Unité de réseau optique, ONU, (231 à 232) selon la revendication 5, dans laquelle la surveillance comprend la détermination d'une durée du nouvel intervalle de temps sur la base du début d'un nouvel intervalle de temps et d'un début d'un intervalle de temps précédent.

7. Unité de réseau optique, ONU, (231 à 232) selon les revendications 5 ou 6, dans laquelle la notification comprend en outre la fourniture d'informations indiquant le début et/ou la durée du nouvel intervalle de temps.

8. Unité de réseau optique, ONU, (231 à 232) selon l'une des revendications précédentes, dans laquelle l'ONU est en outre configurée pour effectuer l'identification du trafic provenant de l'au moins une RU sur la base du changement de la longueur et/ou du débit des paquets.

9. Unité de réseau optique, ONU, (231 à 232) selon la revendication 8, dans laquelle l'identification comprend en outre l'association du trafic à une RU (111 à 112) respective sur la base d'informations identifiant la RU respective.

10. Unité de réseau optique, ONU, (231 à 232) selon l'une des revendications précédentes, configurée en outre pour effectuer la réception d'une carte d'allocation amont mise à jour et pour transférer des paquets ultérieurs selon la carte d'allocation amont mise à jour.

11. Terminal de ligne optique, OLT, (210) configuré pour communiquer dans un réseau optique (200) avec au moins une unité de réseau optique, ONU, (231 à 232) connectée en outre à au moins une unité radio, RU, le réseau optique assurant la communication entre l'unité radio, RU, et au moins une unité centrale, CU ; dans lequel la RU transfère à la CU des paquets comprenant respectivement un ensemble de données de sous-porteuses dans le domaine fréquentiel dérivées d'un symbole dans le domaine temporel pour un traitement ultérieur dans la CU ;
**caractérisé en ce que** l'OLT est configuré pour effectuer ce qui suit :

    - recevoir de l'ONU une notification sur un changement d'une longueur et/ou d'un débit des paquets ;
    - à partir de cela, déterminer une carte d'allocation amont mise à jour, et
    - fournir la carte d'allocation amont mise à jour à l'au moins une ONU (231 à 232).

12. Terminal de ligne optique, OLT, (210) selon la revendication 11, dans lequel un nombre de données de sous-porteuses dans le domaine fréquentiel et/ou un espacement de données de sous-porteuses dans le domaine fréquentiel est configurable entre des intervalles de temps prédéfinis et constants dans un intervalle de temps prédéfini.

13. Terminal de ligne optique, OLT, (210) selon la revendication 12, dans lequel le changement de la longueur des paquets indique un début d'un nouvel intervalle de temps comprenant des paquets avec un nombre de données de sous-porteuses dans le domaine fréquentiel mises à jour, et dans lequel le changement du débit des paquets indique un début d'un nouvel intervalle de temps comprenant des paquets avec un espacement de données de sous-porteuses dans le domaine fréquentiel mises à jour.

14. Terminal de ligne optique, OLT, (210) selon la revendication 13, dans lequel la notification comprend en outre des informations indiquant au moins un début et/ou une durée d'un nouvel intervalle de temps.

15. Terminal de ligne optique, OLT, (210) selon l'une des revendications 10 à 13, dans lequel la notification comprend en outre des informations indiquant un état de tampon de l'ONU, et dans lequel la détermination est en outre basée sur un temps aller-retour entre l'OLT et l'au moins une ONU.

FIG.1

FIG.2

EP 3 883 258 B1

FIG.3

FIG.4

FIG.5

FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018076914 A1
- WO 2019051869 A1